# EUROPEAN PATENT APPLICATION

(11) **EP 2 067 606 A1**
(43) Date of publication of application: **10.06.2009**
(21) Application number: 07807461.4
(22) Date of filing: 18.09.2007
(51) Int. Cl.: B29C 67/00, C08F 212/04, C08F 220/04

(54) **METHOD OF PHOTOFABRICATION**

(30) Priority: 27.09.2006 JP 2006263061
(71) Applicant: JSR Corporation, Tokyo 104-8410 (JP)
(72) Inventor: MOROHOSHI, Kimitaka, Tokyo 104-8410 (JP); TERAMOTO, Toshio, Tokyo 104-8410 (JP)
(74) Representative: TBK-Patent
(86) International application number: PCT/JP2007/068060
(87) International publication number: WO 2008/038541

(57) **Abstract**

An object of the present invention is to provide an optical molding method that is capable of taking out the model shape of an optically-molded object with high accuracy, and capable of performing molding with high accuracy even when a shape having a fine structure or a microstructure is molded. An optical molding method to form a three-dimension shape object in which cured resin layers are laminated and integrated includes forming a cured resin layer of a photo-curable composition by irradiating a photo-curable composition layer with light, forming the photo-curable composition layer again above the cured resin layer, forming further a cured resin layer of the photo-curable composition by radiating a light, and repeating these steps, wherein the photo-curable composition layer is formed by applying a photo-curable resin composition containing resin, an ethylenic unsaturated compound, and an organic solvent above a base material or above the cured resin layer formed above the base material, and removing the organic solvent contained in the photo-curable resin composition, and wherein the three-dimension shape object is formed by removing the photo-curable composition that is not cured in the cured resin layers after the formation of all the cured resin layers is completed.

## Description

### Technical Field

The present invention relates to an optical molding method in which light is selectively radiated to a photo-curable resin composition to form a cured resin layer, and the cured resin layers are laminated one after another to form a three-dimensional figure.

### Background Art

In conventional optically-laminating molding methods (hereinafter called "optical molding methods"), a three-dimensional model is molded based on data on a group of cross sections that are obtained by slicing the three-dimensional model to be molded into a plurality of layers. Typically, a light beam is radiated on the liquid surface of a photo-curable resin liquid in the area corresponding to the cross section of the lowest level. As a result, the photo-curable resin liquid located in the liquid surface portion to which the light was radiated is optically cured, so that a cursed resin layer corresponding to one cross section of the three-dimensional model is molded. Next, a photo-curable resin liquid in a non-cured state is coated on the surface of this cured resin layer with a predefined thickness. In this case, the coating is performed by submerging this cured resin layer into a photo-curable resin liquid filling a resin bath by a predefined thickness. Then, laser beam scanning is performed along a predefined pattern on this surface, so that the portion of the coating layer that is irradiated with the light is cured. The cured portion is laminated on and integrated with the lower cured resin layer. After that, the radiation with light and the coating of a photo-curable resin liquid are performed repeatedly while changing the cross section to be treated with the light radiation process to a neighboring cross section, so that a desired three-dimensional model is molded (see Patent documents 1 and 2).

As described above, in the process to form a cured resin layer, a coating is typically performed by submersing a cured resin layer of a three-dimensional model that is already optically cured into a resin bath by a predefined thickness. In this case, this resin bath is filled with resin irrelevant to the size of an object to be molded, and it is necessary to fill the apparatus with a constant amount of resin. Furthermore, in a case where it is necessary to use different resin liquids, the liquid in the resin bath needs to be entirely replaced. Therefore, it has not only wasted resin liquids, but also taken a lot of trouble.

To solve such problems, it is conceivable to take countermeasures such as applying only the required amount of resin on the molding table to form a three-dimensional object by laminating cured resin layers. In such a case, in the process in which curing and laminating are performed repeatedly by spreading an optical curable resin thinly with a recoater blade for each lamination pitch, when the process is performed just by applying the required amount of the resin liquid repeatedly, the difference in height between the cured object and the surrounding resin liquid become larger as the height of the lamination increases. Therefore, it poses a problem that the lamination pitch becomes uncertain in a proximity portion where the resin is supplied and in a distant portion where the resin is thinly spread, and the height of the final three-dimensional object become different from the desired size. Accordingly, it is also conceivable that a three-dimensional model is molded while an enclosure is also molded around the object to be molded. However, in this case, although it is effective when the molding is performed in a specific area or a similar situation, it is very difficult to perform lamination on the entire surface of the base material with high accuracy to form a structure.
[Patent Document 1]
   Japanese Unexamined Patent Application Publication No. 56-144478
[Patent Document 2]
   Japanese Unexamined Patent Application Publication No. 62-35966

### Disclosure of Invention

### Technical Problems

As described above, it has been very difficult to uniformly apply resin on the entire surface of the base material and to perform lamination on the entire surface of the base material with high accuracy to form a structure in the conventional optical molding methods.

The present invention has been made to solve these problems in optical molding, and an object of the present invention is to provide an optical molding method that is capable of taking out the model shape of an optically-molded object with high accuracy, and capable of performing molding with high accuracy even when a shape having a fine structure or a microstructure is molded.

### Technical Solution

An optical molding method in accordance with the present invention is a molding method of a three-dimensional model that is formed by an optical molding method, wherein the three-dimensional model is formed by: applying a photo-curable resin composition containing a resin, a compound having at least one ethylenic unsaturated double bond, and an organic solvent; removing the organic solvent contained in the photo-curable resin composition; irradiating a photo-curable composition layer with light; repeating these steps; and then removing a non-cured portion of the photo-curable composition. Note that the resin is preferably in a range between 1,000 to 100,000 in weight-average molecular weight in terms of polystyrene by gel-permeation chromatography. Furthermore, this resin is preferably in a range between 2, 000 to 50,000 in weight-average molecular weight. Furthermore, the resin may be resin containing an ethylenic unsaturated group and/or alkali soluble resin. Furthermore, the removal of the non-cured portion is preferably performed with an organic solvent or an alkaline aqueous solution.

Furthermore, the resin may be an alkali-soluble copolymer containing the following structural units (a), (b), and (c): (a) a structural unit derived from a radical polymerizable compound having a carboxyl group; (b) a structural unit derived from a radical polymerizable compound having a phenolic hydroxyl group; and (c) a structural unit derived from other radical polymerizable compounds.

### Advantageous Effects

An optical molding method in accordance with the present invention enables the formation of a molded object with high accuracy.

### Brief Description of Drawings

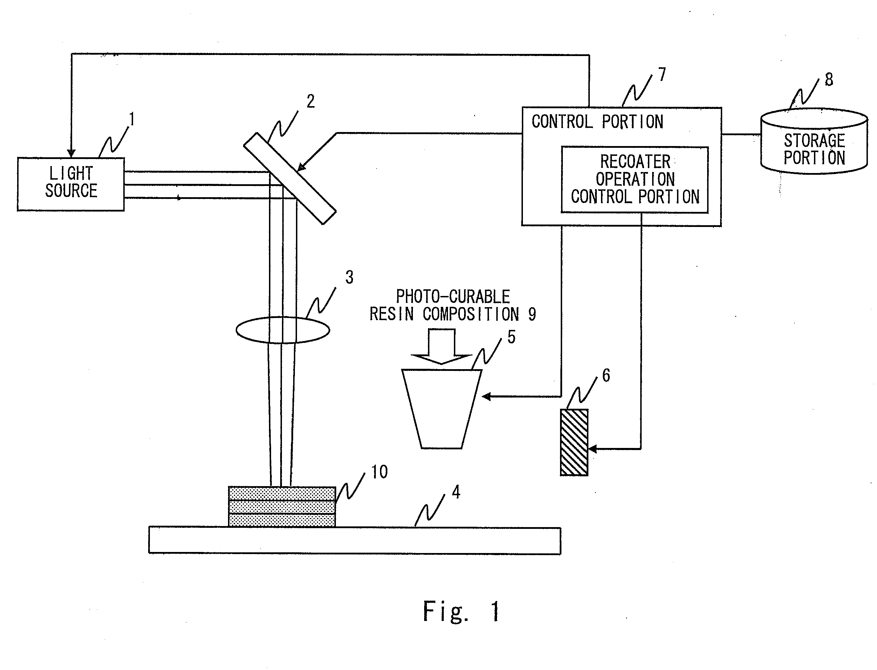

Fig. 1 is a diagram illustrating a schematic structure of an optically-curing molding apparatus in accordance with an embodiment of the present invention.

### Explanation of Reference

- 1: light source
- 2: DMD
- 3: lens
- 4: molding table
- 5: dispenser
- 6: recoater
- 7: control portion
- 8: storage portion
- 9: photo-curable resin composition
- 10: photo-curable composition
- 100: three-dimensional structure manufacturing apparatus

### Best Modes for Carrying Out the Invention

Embodiments to which the present invention is applicable are explained hereinafter. The following explanation is made only for illustrating embodiments of the present invention, and the present invention is not limited to the following embodiments. To clarify the explanation, omissions and simplifications are made as appropriate in the following description. Furthermore, those skilled in the art can easily make modifications, additions, and replacements for each component in the following embodiments without departing from the scope of the present invention.

### First embodiment

One example of an optically-curing molding apparatus (hereinafter called "three-dimensional structure manufacturing apparatus 100") used in a method of manufacturing a three-dimensional structure (three-dimension shape object) in accordance with the present invention is explained with reference to Fig. 1. The three-dimensional structure manufacturing apparatus 100 includes a light source 1, a digital mirror device (DMD) 2, a lens 3, a molding table 4, a dispenser 5, a recoater 6, a control portion 7, and a storage portion 8.

The light source 1 generates a laser beam. For example, a laser diode (LD) capable of generating a laser light of 405 nm, or an ultraviolet (UV) lamp may be used as the light source 1. The type of the light source 1 is selected based on the relation with the curing wavelength of a photo-curable resin composition, and the optical molding method in accordance with the present invention is not limited to a certain type of light source 1.

The DMD 2 has a CMOS (Complementary Metal Oxide Semiconductor) semiconductor covered with a lot of micro mirrors, each of which is independently movable. The micro mirror is a device capable of inclining around the diagonal line by a certain angle by an electrostatic field effect. For example, a device available from Texas Instruments Incorporated or the like can be used as the DMD 2. The DMD 2 used in this embodiment has a rectangular shape of 40.8×31.8 mm as a whole (while the mirror portion has a rectangular shape of 14.0×10.5 mm), and composed of 786,432 micro mirrors of 13.68 µm on each side arranged at intervals of 1 µm. Furthermore, the micro mirror can be inclined around the diagonal line by about ±10 degrees, e.g., by ±12 degrees. The DMD 2 reflects laser beams emitted from the light source 1 by the individual micro mirrors such that only the laser beams that are reflected on the micro mirrors controlled to a predefined angle by the control portion 7 are radiated to the photo-curable composition 10 located on the molding table 4 through the lens 3. Note that the photo-curable composition 10 will be explained later.

The unit area in which the laser beam reflected by the DMD 2 is radiated on the photo-curable composition 10 through the lens 3 is called "projection area". By controlling the anglers of the micro mirrors individually and determining whether or not the reflected laser beam is radiated to the photo-curable composition 10 for each micro mirror, a pattern in which the light beams are selectively radiated is determined within the projection area.

The lens 3 guides the laser beam reflected by the DMD 2 on the photo-curable composition 10 and forms the projection area. The lens 3 may be a condensing lens using a convex lens, or may be a concave lens. By using a concave lens, it is possible to obtain a projection area larger than the actual size of the DMD 2. The lens 3 in accordance with this embodiment is a condensing lens, and reduces the incident light by about 15-fold and concentrates the light on the photo-curable composition 10.

The molding table 4, which serves as the base material, is a plate-shaped pedestal on which cured resin is successively deposited and placed. This molding table 4 can move horizontally and vertically by a driving mechanism, i. e. , moving mechanism (not shown). With this driving mechanism, it is possible to manufacture a three-dimensional structure over a desired area.

The dispenser 5 contains a photo-curable resin composition 9, and supplies a prescribed amount of the photo-curable resin composition 9 to a predefined place.

The recoater 6 includes, for example, blade mechanism and moving mechanism, and applies the photo-curable resin composition 9 uniformly.

The control portion 7 controls the light source 1, the DMD 2, the molding table 4, the dispenser 5, and the recoater 6 in response to control data including exposure data. The control portion 7 can be typically constructed by installing a certain program in the computer. A typical computer configuration includes a central processing unit (CPU) and a memory. The CPU and memory are connected to an external storage device such as a hard disk drive that serves as an auxiliary storage device through a bus. This external storage device functions as the storage potion 8 of the control portion 7. A transportable storage medium such as a flexible disk is inserted to the storage medium drive device that functions as the storage portion 8, such as a flexible disk drive, a hard disk drive, or a CD-ROM drive. Certain computer programs that cooperate with the operating system to give instructions to the CPU for carrying out this embodiment can be stored in the storage medium.

The storage portion 8 stores control data including exposure data for a group of cross sections that are obtained by slicing a three-dimensional structure to be molded into a plurality of layers. The control portion 7 carries out the molding of a three-dimensional structure by controlling mainly the angle of each micro mirror in the DMD 2 and the movement of the molding table 4 (i.e., the place of the laser light projection area for the three-dimensional structure) based on the exposure data stored in the storage portion 8.

Computer programs are loaded to the memory to be executed. The computer programs can be compressed or divided into a plurality of pieces to be stored in a storage medium.
Furthermore, user interface hardware can be provided. The user interface hardware may include, for example, a pointing device for input such as a mouse, a keyboard, and a display device for presenting visual data to a user.

Next, a photo-curable resin composition 9 in this embodiment is explained hereinafter. Firstly, each component of the photo-curable resin composition 9 is explained. The photo-curable resin composition 9 contains (A) resin, (B) a compound having at least one ethylenic unsaturated double bond, and (C) an organic solvent as the essential components. Furthermore, (D) a radiation radical polymeric initiator and other additive agents may be mixed as nonessential components.

### (A) Resin

Any resin component that is in a solid state at a room temperature and is soluble in (C) organic solvent contained in the photo-curable resin composition 9 can be used as (A) resin component contained in the photo-curable resin composition 9 used in this embodiment of the present invention. Containing (A) resin component in the photo-curable resin composition 9 exhibits an ability to suppress the fluidity of a composition layer from which (C) organic solvent is removed in the application process (which is explained later).

In this case, resin in a range between 1,000 to 100,000 in weight-average molecular weight Mw in terms of polystyrene by gel-permeation chromatography (GPC), preferably between 2,000 to 50,000, and more preferably between 3,000 to 20,000 can be used as (A) resin component. The weight-average molecular weight less than 1,000 could hinder the formation of a coating film in a film-state after the removal of (C) organic solvent, and the weight-average molecular weight greater than 100,000 could make the removal of a non-cured portion (which is explained later) very difficult.

The mixture amount of (A) resin to be mixed is 20 to 90 mass% when the total amount of the composition excluding (C) organic solvent is defined as 100 mass%. The mixture amount of (A) resin less than 20 mass% decreases the effect of suppressing the fluidity when the composition is applied, and the mixture amount greater than 90 mass% could deteriorates the application-ability. For the above-mentioned reason, it is preferably 25 - 80 mass%, and more preferably 30 - 70 mass%.

(A) resin component preferably contains an ethylenic unsaturated group. Containing the ethylenic unsaturated group in (A) component can increase the mechanical strength of a three-dimensional structure molded by a method in accordance with the present invention. There is no particular restriction on the way to introduce an ethylenic unsaturated group into (A) component, and it can be carried out by a well-known method. For example, it can be achieved by reacting a compound having a group capable of reacting to a hydroxyl group and an ethylenic unsaturated group, such as acrylic acid or 2-methacryloxy ethyl isocyanate, with a polymer containing a hydroxyl group. Note that examples of synthesis of resin containing an ethylenic unsaturated group will be explained later.

### (B) Compound having at least one ethylenic unsaturated double bond

A compound having at least one ethylenic unsaturated double bond (hereinafter called "(B) ethylenic unsaturated compound") that is used as (B) component in the present invention is a compound that has at least one ethylenic unsaturated group in its molecule and is in a liquid or solid state at a room temperature. Typically, a (meth)acrylate compound having a (meth) acryloyl group or a compound having a vinyl group is used as (B) ethylenic unsaturated group. Either of a mono-functional compound (compound having one (meth)acryloyl group) or a poly-functional compound (compound having more than one (meth)acryloyl group) can be used as the (meth)acrylate compound.
Examples of (B) ethylenic unsaturated compound include 2-hydroxyethyl (meth)acrylate, methyl (meth)acrylate, dicyclopentadienyl (meth)acrylate, isobornyl (meth)acrylate, trimethylolpropane tri(meth)acrylate, pentaerythritol tri(meth)acrylate, ethylene glycol di(meth)acrylate, tris(2-hydroxyethyl) isocyanurate tri(meth)acrylate, pentaerythritol tetra(meth)acrylate, dipentaerythritol penta(meth)acrylate, and dipentaerythritol hexa(meth)acrylate. These (B) ethylenic unsaturated compounds may be used either individually or in combination of two or more. Furthermore, a commercially-available compound may be used as (B) ethylenic unsaturated compound without requiring any additional process.

The amount of (B) ethylenic unsaturated compound is 10 to 80 mass% when the total amount of the composition excluding (C) organic solvent is defined as 100 mass%. The ratio of (B) component less than 10 mass% could lead insufficient curing, and the ratio greater than 80 mass% could make the composition layer generated by applying the photo-curable resin composition 9 exhibit fluidity, so that the advantageous effect of the present invention could not be obtained. Therefore, the amount of (B) component is preferably 20 to 75 mass%, and more preferably 30 to 70 mass%.

An organic solvent that can dissolve (A) resin and the other components uniformly and do not react to any of the other components is used as (C) organic solvent. In terms of solubility, reactivity to each component, and easiness of coating-film formation, preferable (C) organic solvent includes: alkyl ethers of polyhydric alcohol such as ethylene glycol monoethyl ether and diethylene glycol monomethyl ether; alkyl ether acetates of polyhydric alcohol such as ethyl cellosolve acetate and propylene glycol monomethyl ether acetate; esters such as ethyl 3-ethoxypropionate, methyl 3-methoxypropionate, and ethyl 2-hydroxypropionate; and ketones such as diacetone alcohol.

The mixture amount of (C) organic solvent is 20 to 200 pts.mass when the total amount of the composition excluding (C) organic solvent is defined as 100 pts.mass.

### (D) Radiation radical polymeric initiator

A photo-curable resin composition 9 used in this embodiment of the present invention may be mixed with (D) radiation radical polymeric initiator (hereinafter, also called simply "(D) component"). (D) component may include α-diketones, benzophenones, acetophenones, and quinones. Commercially-available products may include Irgacure 184, 651, 500, 907, CGI369, and CG24-61 (all available from Ciba Specialty Chemicals Inc.), Lucirin LR8728 and Lucirin TPO (all available from BASF Co.), Darocur 1116 and 1173 (all available from Ciba Specialty Chemicals Inc.), Uvecryl P36 (available from UCB Co.). These compounds may be used either individually or in combination of two or more.

Next, a method of preparing a photo-curable resin composition 9 in accordance with this embodiment of the present invention is explained hereinafter. Firstly, examples of synthesis of (A) resin, which is one component of the photo-curable resin composition 9, are explained.

Firstly, nitrogen-substitution was carried out in a flask having a dry-ice/methanol reflux device. After that, 3 g of 2,2'-azobisisobutyronitrile and 115 g of propylene glycol monomethyl ether acetate were fed as a polymeric initiator and an organic solvent respectively, and it was stirred until the polymeric initiator(2,2'-azobisisobutyronitrile) was dissolved. Subsequently, after 20 g of hydroxyethyl methacrylate, 25 g of styrene, and 55 g of n-butyl acrylate were fed, stirring was slowly started. After that, the temperature of the solution was raised to 80 °C, and polymerizing was carried out for six hours at this temperature. After that, 0.13 g of dilauryl acid di-n-butyl tin and 0.05 g of 2,6-di-t-butyl-p-cresol were fed in the solution obtained by the above-described stirring, and 23. 7 g of 2-methacryloxy ethyl isocyanate was dropped such that the temperature was maintained at or less than 60 °C while the solution was being stirred. After the dropping was completed, it was left at 60 °C for five hours for the reaction, and a polymer solution having mathacrylic group in the side chain was obtained. After that, the reaction product was dropped into a large quantity of hexane so that the reaction product was coagulated. Further, this coagulation was re-dissolved in tetrahydrofuran of the same mass, and coagulated again in a large quantity of hexane. After repeating the re-dissolving and coagulating process for three times, the resultant coagulation was dried in vacuum at 40 °C for 48 hours, and a copolymer containing ethylenic unsaturated group having weight-average molecular weight of 12,000 ((A) component) was obtained.

Next, a copolymer containing ethylenic unsaturated group (37.0 pts.mass), dipentaerythritol hexaacrylate (27.8 pts.mass), N-vinyl-2-pyrrolidone (27.8 pts.mass), Irgacure 819: bis(2,4,6-trimethyl benzoyl)-phenylphosphine oxide (2.8 pts.mass), 2,4-diethylthioxanthone (1.9 pts.mass), 4-dimethylaminobenzoic acid ethyl ester (0.5 pts.mass), Yellow Gran 6G (coloring agent (1.9 pts.mass)), SH28PA: dimethylpolysiloxane polyoxyalkylene copolymer (surfactant (0.1 pts.mass)), and SH190: dimethylpolysiloxane polyoxyalkylene copolymer (surfactant (0.2 pts.mass)), and propylene glycol monomethyl ether acetate (PGMEA) (59pts.mass). as a solvent were put in a vessel having a stirring device. Note that the bis(2,4,6-trimethyl benzoyl)-phenylphosphine oxide and the Yellow Gran 6G (coloring agent) were the ones from Ciba Specialty Chemicals Inc. Furthermore, SH28PA: dimethylpolysiloxane polyoxyalkylene copolymer (surfactant) and SH190: dimethylpolysiloxane polyoxyalkylene copolymer (surfactant) were the ones from Dow Corning Toray Co., ltd. Then, a photo-curable resin composition 9 was prepared by stirring it at 25 °C for 24 hours (see Table 1).

Lamination was carried out based on the photo-curable resin composition 9 prepared in the manner described above. A manufacturing operation of a three-dimensional structure by a three-dimensional structure manufacturing apparatus 100 in accordance with this embodiment of the present invention is explained hereinafter.

Firstly, a photo-curable resin composition 9 in a non-cured state is put into the dispenser 5. The molding table 4 is positioned at the initial position. The dispenser 5 supplies a prescribed amount of the contained photo-curable resin composition 9 above the molding table 4. The recoater 6 sweeps the photo-curable resin composition 9 such that the photo-curable resin composition 9 is drawn out, and forms a coating layer corresponding to one layer to be cured.

The film contains a larger quantity of organic solvent immediately after the application of the photo-curable resin composition 9. Therefore, it is possible to carry out heating to remove the solvent. When the heating is carried out, for example, a hotplate, an oven, an infrared heater, or the like can be used. Furthermore, although the heating condition depends on the type of solvent and the film-thickness of coating, it may be carried out, for example, at 40 to 150 °C for one minute. As described above, when heating is carried out, the organic solvent of the coating film does not necessarily have to be completely removed. That is, it does not pose any problem even if the organic solvent remains in the coating film within the limits, e.g., by several mass%, within which it does not hinder the implementation of the present invention. A process to form a molded object by irradiating a photo-curable composition 10, from which the organic solvent is removed, with light (i.e., optical molding method) is explained hereinafter. Note that a substance generated by applying a photo-curable resin composition 9 and removing an organic solvent is referred to as "photo-curable composition 10", as compared with the prepared "photo-curable resin composition 9", in the following explanation.

A laser beam emitted from the light source 1 enters to the DMD 2. The DMD 2 is controlled by the control portion 7 according to exposure data stored in the storage portion 8, and adjusts the angles of the micro mirrors that correspond to the portion where the photo-curable composition 10 is irradiated with the laser beam. In this way, the laser beams that are reflected on those micro mirrors are radiated to the photo-curable composition 10 through the lens 3, and the laser beams that are reflected on the other micro mirrors are not radiated to the photo-curable composition 10. The irradiation of the photo-curable composition 10 with the laser beam is carried out, for example, for 0.4 seconds. At this point, the projection area on the photo-curable composition 10 is, for example, in the order of 1.3×1.8 mm, and can be also reduced to the order of 0.6×0.9 mm. Preferably, the size of the projection area is typically equal to or less than 100 mm².

Furthermore, the projection area can be increased to the order of 6×9 cm by using a concave lens as the lens 3. If the projection area is increased beyond this size, the energy density of the laser beam radiated on the projection area becomes lower, and therefore the curing of the photo-curable composition 10 could become insufficient. Furthermore, in a case where a three-dimensional structure larger than the size of projection area of the laser beam is to be formed, it is necessary to move the irradiating place of the laser beam, for example, by horizontally moving the molding table 4 with the moving mechanism, so that the entire molding area is irradiated. In this case, the irradiation with the laser beam is performed on a one-shot basis for each of the projection areas. The control for the irradiation with the laser beam for each projection area will be explained later.

By moving the projection area and carrying out irradiation with a laser beam, i.e., exposure by defining each projection area as a unit in a manner like this, the photo-curable composition 10 is cured and the first cured resin layer is formed. The lamination pitch corresponding to one layer, i.e., the thickness of one cured resin layer is, for example, 1 to 50 µm, preferably 2 to 10 µm, and more preferably 5 to 10 µm.

Subsequently, the second layer of the three-dimensional structure is formed in a desired shape by a similar process at the same time. Specifically, the photo-curable resin composition 9 supplied from the dispenser 5 is applied on the cured resin layer that was formed as the first layer such that the photo-curable resin composition 9 is drawn out beyond the three-dimensional structure in a uniform thickness by the recoater 6. Then, the second cured resin layer is formed on the first cured resin layer by irradiating it with a laser beam. The third and subsequent cured resin layers are successively laminated in a similar manner. Then, after the lamination of the final layer is completed, the molded object formed on the molding table 4 is taken out. A photo-curable composition 10 that is adhered on the surface of the molded object is removed by cleaning or a similar process. In other words, the non-cured photo-curable composition 10 in the cured resin layers, i.e., non-cured portion of the cured resin layers is removed. Then, if necessary, the curing may be further advanced by irradiating it with an ultraviolet lamp or the like, or by heating it. Note that the cleaning and removing method that is performed after the molded object is taken out will be explained layer.

Incidentally, an application method of a photo-curable resin composition 9 by using the recoater 6 is explained in this exemplary embodiment of the present invention. However, the application can be also carried out by using other methods such as spray-coating. Furthermore, in a case where a circular substrate such as a silicon wafer is used, the application can be also carried out by spin-coating.

A preferable cleaning and removing method for non-cured composition layers existing outside and inside of a three-dimensional structure formed in this manner, i.e., for non-cured portion may be a method in which an unnecessary unexposed portion (non-cured portion) is dissolved and removed by using an organic solvent or the like and only the exposed portion (cured portion) is left intact so that a cured film having a desired pattern is obtained. With regard to the organic solvent, the organic solvent used in the photo-curable resin composition 9 may be used without requiring any additional process, or other organic solvents may be also used. Examples of an organic solvent that can used for cleaning and removing the non-cured portion include alcohols such as methanol, ethanol, ethylene glycol, diethylene glycol, and propylene glycol; cyclic ethers such as tetrahydrofuran and dioxane; alkyl ethers of polyhydric alcohol such as ethylene glycol monomethyl ether, ethylene glycol monoethyl ether, ethylene glycol dimethyl ether, ethylene glycol diethyl ether, diethylene glycol monomethyl ether, diethylene glycol monoethyl ether, diethylene glycol dimethyl ether, diethylene glycol diethyl ether, diethylene glycol ethyl methyl ether, propylene glycol monomethyl ether, and propylene glycol monoethyl ether; alkyl ether acetates of polyhydric alcohol such as ethylene glycol ethyl ether acetate, diethylene glycol ethyl ether acetate, propylene glycol ethyl ether acetate, and propylene glycol monomethyl ether acetate; aromatic hydrocarbons such as toluene and xylene; ketones such as acetone, methyl ethyl ketone, methyl isobutyl ketone, cyclohexanone, 4-hydroxy-4-methyl-2-pentanone, and diacetone alcohol; esters such as ethyl acetate, butyl acetate, ethyl 2-hydroxypropionate, ethyl 2-hydroxy-2-methyl propionate, ethyl 2-hydroxy-2-methyl propionate, ethyl ethoxyacetate, ethyl hydroxyacetate, methyl 2-hydroxy-3-methyl butanate, methyl 3-methoxypropionate, ethyl 3-methoxypropionate, ethyl 3-ethoxypropionate, methyl 3-ethoxypropionate, ethyl acetate, and butyl acetate. Among these organic solvents, the cyclic ethers, the alkyl ethers of polyhydric alcohol, the alkyl ether acetates of polyhydric alcohol, the ketones, and the esters are preferred. They can be also used either individually or in combination of two or more.

After the process with the organic solvent, it is dried pneumatically by using a air blower or the like, or dried under heat by using a hotplate, an oven, or the like.

As has been described above, a photosensitive coating composed of a photo-curable resin composition 9 in accordance with the present invention can be sufficiently cured by irradiation with light alone. However, depending on the intended purpose, it can be further cured by carrying out additional irradiation with light (hereinafter called "post-exposure") or heating. A light radiating method similar to the previous method can be used as the post-exposure. In this case, although there is no particular restriction on the amount of the light radiation, it is preferably 100 to 2000 mJ/cm² in the case of a high-pressure mercury-vapor lamp.

With regard to the heating method, heating may be carried out, by using a heating process with a hotplate or an oven, at a certain temperature, e.g., at 60 to 100 °C for a certain time period, e.g., for 5 to 30 minutes in the case of the hotplate and for 5 to 60 minutes in the case of the oven. By carrying out this post-process, it is possible to obtain a cured film having a desired pattern with better characteristics.

As described above, a three-dimensional structure having a desired shape is molded by using the three-dimensional structure manufacturing apparatus 100 and by using the photo-curable resin composition 9 in this embodiment of the present invention. Whereas a molded object has been formed by irradiating a photo-curable resin liquid with light in the past, a molded object having a desired shape is formed by irradiating a photo-curable composition 10 that is generated by removing the organic solvent from a photo-curable resin composition 9 with light in this embodiment of the present invention. Furthermore, the non-cured portion is in a liquid state in the conventional optical molding methods. Therefore, in the case where an object having a large overhang portion is to be molded, pillars called "supports" have been molded at regular intervals to prevent the deformation of the object, and the supports have been removed after the completion of the molding. Note that the "overhang portion" is a portion having a structure in which the upper portion has a larger width than that of the lower potion, and it is typically a structure composed of a pillar portion and a kind of ceiling portion that contacts with the top of the pillar portion and overhangs horizontally. Furthermore, the overhang portion is not limited to straight-line structures, and it is a concept including a shape having a curved surface that overhangs horizontally while rising vertically, and the so-called reverse-tapered shape and the like. Furthermore, the expression "having an overhang portion" means the three-dimensional structure has at least one overhang portion when viewed in the vertical direction even if the three-dimensional structure is rotated in any direction. However, since the photo-curable composition 10 that is based on the photo-curable resin composition 9 is used in this embodiment of the present invention, each layer has no fluidity. Therefore, it is not necessary to form the support, and thus enabling molding with high precision. Note that the non-cured potion can be removed by an organic solvent or the like after the formation of all the cured resin layers is completed.

As has been described above, by using a photo-curable resin composition 9 containing an organic solvent, the viscosity of the photo-curable resin composition 9 is lowered in this embodiment of the present invention. Then, the volatile solvent portion is vaporized or removed by heating after the application. In this way, the photo-curable composition 10 that is applied on a laminated-layer basis becomes a layer state having no fluidity, and therefore it becomes possible to make the coating thickness of the composition layer uniform for each laminated layer. Furthermore, even portions that are not optically cured are laminated as layers having no fluidity. Therefore, the potions that are not optically cured serve a sacrificing function as a support, and since they dissolve and flow out after that, the model can be cleanly taken out.

Furthermore, the photo-curable resin composition 9 was prepared with 37 pts.mass of resin (the total solid content being 100 pts.mass) in this embodiment of the present invention. However, with regard to the formation of the photo-curable resin layers in the above-described layer state (film state) having no fluidity, it is possible to form the film state as long as at least 20 mass% of the resin component is contained, though depending on the type and the molecular weight of resin and the type of ethylenic unsaturated compound. Furthermore, with regard to the upper limit of the resin component, it is still possible to mold a three-dimensional structure with the mixture amount of 90 mass% when a large quantity of a reactive group is contained, though depending on the types of resin and ethylenic unsaturated compound. However, in the case where the component amount of resin is to be adjusted, e.g., when the amount of resin component is increased, the viscosity of the photo-curable resin composition 9 becomes higher, so that it could require a larger amount of a solvent or could make the removal of a non-cured portion very difficult. That is, it is possible to adjust as appropriate the component amount of resin in the film formation, while comprehensively taking the viscosity, the film-thickness adjustment, the process for taking out the molded object after the curing, and similar factors into consideration.

Furthermore, in this embodiment of the present invention, since a three-dimensional structure is molded by using the photo-curable resin composition 9, non-cured resin remaining inside of the structure can be easily removed even when the three-dimensional structure has a complex internal structure like the one described above. Therefore, it is also possible to improve the molding accuracy in terms of this fact.

### Second embodiment

This embodiment is different from the first embodiment only in the composition of a photo-curable resin composition 9 and in the removal method of a non-cured potion, and is the same in the other matters including that a three-dimensional structure is molded by using a three-dimensional structure manufacturing apparatus 100, and therefore detailed explanation of those matters is omitted.

### [I. Photo-curable resin composition]

A photo-curable resin composition 9 in accordance with this embodiment of the present invention contains (A) resin, (B) a compound having at least one ethylenic unsaturated double bond, and (C) an organic solvent as the essential components. Furthermore, (D) a radiation radical polymeric initiator and other additive agents may be mixed as nonessential components. Furthermore, (A) resin is a copolymer having alkali solubility and also having (a) a structural unit derived from a radical polymerizable compound having a carboxyl group, (b) a structural unit derived from a radical polymerizable compound having a phenolic hydroxyl group, and (c) a structural unit derived from other radical polymerizable compounds.

### (A1) Alkali-soluble copolymer

(A) resin used in the present invention is a copolymer having alkali solubility (hereinafter called "(A1) alkali-soluble copolymer"), and can be obtained by radical-copolymerizing, in a solvent, (a') a radical polymerizable compound having a carboxyl group in an amount of typically 1 to 50 mass%, preferably 5 to 40 mass%, and more preferably 10 to 30 mass%, (b') a radical polymerizable compound having a phenolic hydroxyl group in an amount of typically 1 to 50 mass%, preferably 5 to 40 mass%, and more preferably 10 to 30 mass%, and (c') other radical polymerizable compounds in an amount of typically 5 to 80 mass%, preferably 20 to 70 mass%, and more preferably 30 to 60 mass%. The structural unit (a), the structural unit (b), and the structural unit (c) are derived from (a') radical polymerizable compound, (b') radical polymerizable compound, and (c') radical polymerizable compound respectively.

### (a') Radical polymerizable compound having a carboxyl group

The radical polymerizable compound having a carboxyl group (hereinafter called "(a') carboxyl group compound"), i.e., (a') component adjusts the alkali solubility of (A1) alkali-soluble copolymer. For example, acrylic acid, methacrylic acid, crotonic acid, or the like can be used for it. These compounds may be used either individually or in combination of two or more.

### (b') Radical polymerizable compound having a phenolic hydroxyl group

Examples of the radical polymerizable compound having a phenolic hydroxyl group (hereinafter called "(b') phenolic hydroxyl group compound"), i.e., (b') component may include p-hydroxystyrene, α-methyl-p-hydroxystyrene, and 4-allylphenol. These compounds may be used either individually or in combination of two or more.

### (c') Other radical polymerizable compounds

The other radical polymerizable compounds (hereinafter also called "(c') other radical compounds"), i.e., (c') components are used mainly for the purpose of appropriately controlling the mechanical characteristics of (A1) alkali-soluble copolymer. Note that the term "other" is used to express radical polymerizable compounds other than the aforementioned radical polymerizable compound ((a') component and (b') component).
These other (c') radical polymerizable compounds may include (meth)acrylic acid alkyl esters, (meth)acrylic acid aryl esters, dicarboxylic acid diesters, a polymerizable compound containing a nitrile group, a polymerizable compound containing an amide bond, fatty acid vinyls, a polymerizable compound containing chlorine, and conjugated diolefin.

Furthermore, a typical radical polymeric initiator can be used as a polymerization catalyst in the radical-copolymerizing, and its examples may include an azo compound such as 2,2'-azobisisobutyronitrile, 2,2'-azobis-(2,4-dimethylvaleronitrile), and 2,2'-azobis-(4-methoxy-2-dimethylvaleronitrile); organic peroxide such as benzoyl peroxide, lauroyl peroxide, tert-butyl peroxy pivalate, and 1,1'-bis-(tert-butylperoxy) cyclohexane; and hydrogen peroxide. In a case where peroxide is used as a radical polymeric initiator, it may be used as a redox-type initiator by combining it with a reducing agent.
The contents other than (A1) component and the mixture amount of each component in this embodiment are the same as those in the first embodiment.

Next, a method of preparing a photo-curable resin composition 9 in accordance with this embodiment of the present invention is explained hereinafter. Firstly, a method of manufacturing an alkali-soluble copolymer (resin), which is one component of the photo-curable resin composition 9 in this embodiment, is explained.

Firstly, after nitrogen-substitution was carried out in a flask having a dry-ice/methanol reflux device, 3.0 g of 2,2'-azobisisobutyronitrile and 100.0 g of ethyl 3-ethoxypropionate were fed as a polymeric initiator and an solvent respectively, and it was stirred until the polymeric initiator(2,2'-azobisisobutyronitrile) was dissolved. Next, after 35.0 g of α-methyl-p-hydroxystyrene, 15. 0 g of methacrylic acid, and 50.0 g of n-butyl acrylate were fed, stirring was slowly started. Next, the temperature of the solution was raised to 80 °C, and polymerizing was carried out for seven hours at this temperature. After that, the reaction product was dropped into a large quantity of methanol so that the reaction product was coagulated. After this coagulant was washed with water, the coagulation was re-dissolved in tetrahydrofuran of the same mass and coagulated again in a large quantity of methanol. After repeating the re-dissolving and coagulating process for three times, the resultant coagulation was dried in vacuum at 40 °C for 48 hours, and an alkali-soluble copolymer having weight-average molecular weight of 9,000 ((A1) component) was obtained.

Next, an alkali-soluble copolymer (37.1 pts.mass), ethoxylated trimethylolpropane triacrylate (7.8 pts.mass), N-vinyl-2-pyrrolidone (16.7 pts.mass), M8100: poly-functional acrylate (31.0 pts.mass), Irgacure 819: bis(2,4,6-trimethylbenzoyl)-phenylphosphine oxide (2.8 pts.mass), 2,4-diethylthioxanthone (1.9 pts.mass), 4-dimethylaminobenzoic acid ethyl ester (0.5 pts.mass), Yellow Gran 6G (coloring agent (1.9 pts.mass)), SH28PA: dimethylpolysiloxane polyoxyalkylene copolymer (surfactant (0.1 pts.mass)), and SH190: dimethylpolysiloxane polyoxyalkylene copolymer (surfactant (0.2 pts.mass)), and propylene glycol monomethyl ether acetate (PGMEA) (59pts.mass) as a solvent were put in a vessel having a stirring device. Note that the bis(2,4,6-trimethylbenzoyl)-phenylphosphine oxide and the Yellow Gran 6G (coloring agent) were the ones from Ciba Specialty Chemicals Inc. Furthermore, SH28PA: dimethylpolysiloxane polyoxyalkylene copolymer (surfactant) and SH190: dimethylpolysiloxane polyoxyalkylene copolymer (surfactant) were the ones from Dow Corning Toray Co., ltd. Furthermore, the poly-functional acrylate (M8100) was the one from Toagosei Co., Ltd. Then, a photo-curable resin composition 9 in accordance with this embodiment was prepared by stirring it at 25 °C for 24 hours (see Table 1).

**Table 1**

| | | First embodiment | Second embodiment |
|---|---|---|---|
| | copolymer containing ethylenic unsaturated group | 37.0 | - |
| | alkali-soluble copolymer | - | 37.1 |
| | dipentaerythritol hexaacrylate | 27.8 | - |
| | ethoxylated trimethylolpropane triacrylate | - | 7.8 |
| | N-vinyl-2-pyrrolidone | 27.8 | 16.7 |
| | M8100 (poly-functional acrylate) | - | 31.0 |
| | Irgacure 819 | 2.8 | 2.8 |
| | 2,4-diethylthioxanthone | 1.9 | 1.9 |
| | 4-dimethylaminobenzoic acid ethyl ester | 0.5 | 0.5 |
| Other component | Yellow Gran 6G (coloring agent) | 1.9 | 1.9 |
| | SH28PA (surfactant) | 0.1 | 0.1 |
| | SH190 (surfactant) | 0.2 | 0.2 |
| | total solid content (pts.mass) | 100 | 100 |
| solvent | PGMEA | 59 | 59 |

An optically-molded object is formed by using a photo-curable resin composition 9 prepared in a method like the one explained above in a process similar to the first embodiment. Similarly to the previous case, by making the photo-curable resin composition 9 contain an organic solvent, the viscosity of the photo-curable resin composition 9 is lowered, and the volatile solvent portion is removed by evaporation. In this way, the photo-curable composition 10 that is applied for each laminated layer becomes a layer state having no fluidity, and therefore it becomes possible to make the coating thickness of the composition layer uniform for each laminated layer.

Furthermore, even portions that are not optically cured are laminated as layers having no fluidity. Therefore, the potions that are not optically cured serve a sacrificing function as a support, and since they dissolve and flow out after that, the model can be cleanly taken out. That is, since a three-dimensional molded object is formed by using the photo-curable resin composition 9, each layer has no fluidity. Therefore, it is not necessary to form the support, and thus enabling molding with high precision. Note that the non-cured potion can be removed by an alkaline aqueous solution, an organic solvent, or the like after the completion of the molding. Since the details of the solvent and the like used in this example was explained with the first embodiment, explanation of them are omitted.

Furthermore, for example, an aqueous solution containing 0.5 to 5 mass% of alkalis such as sodium hydroxide, potassium hydroxide, sodium carbonate, sodium silicate, sodium metasilicate, ammonia water, ethylamine, n-propylamine, diethylamine, di-n-propylamine, triethylamine, methyl diethylamine, dimethyl ethanolamine, triethanolamine, tetramethylammonium hydroxide, tetraethylammonium hydroxide, choline, pyrrole, piperidine, 1,8-diazabicyclo[5.4.0]-7-undecene, 1,5-diazabicyclo[4.3.0]-5-nonane, and the like can be used as the alkaline aqueous solution. Furthermore, an aqueous solution generated by adding a proper amount of a water-soluble organic solvent such as methanol and ethanol or a surfactant to the above-mentioned aqueous solutions of alkalis can be also used.

Furthermore, the treatment time by the alkaline aqueous solution is typically 30 to 600 seconds, though it varies depending on the type and the mixture ratio of each component in the composition, and the coating thickness. Furthermore, any method from a liquid filling method, a dipping method, a paddle method, a spray method, a shower method, and the like can be used as the treatment method of the alkaline aqueous solution.

After the process with the alkaline aqueous solution, it is washed with flowing water for 30 to 300 seconds, and then dried pneumatically by using an air blower or the like, or dried under heat by using a hotplate, an oven, or the like. Furthermore, when the process by an organic solvent or the like is adopted, it is possible to omit the washing with flowing water.

Furthermore, the photo-curable resin composition 9 was prepared with 37.1 pts.mass of resin content (the total solid content being 100 pts.mass) in this embodiment of the present invention. However, with regard to the formation of the photo-curable resin layers in the above-described layer state (film state) having no fluidity, it is possible to form the film state as long as at least 20 mass% of the resin component is contained, though depending on the type and the molecular weight of resin and the type of ethylenic unsaturated compound. Furthermore, with regard to the upper limit of the resin component, it is still possible to mold a three-dimensional structure with the resin component in the order of 70 mass% when no reactive group is contained, or to mold a three-dimensional structure with the resin component of 90 mass% when a reactive group is contained, though depending on the types of resin and ethylenic unsaturated compound. However, in the case where the component amount of resin is to be adjusted, e.g., when the amount of resin component is increased, the viscosity of the composition becomes higher, so that it could require a larger amount of a solvent. That is, it is possible to adjust as appropriate the component amount of resin in the film formation, while comprehensively taking the viscosity, the film-thickness adjustment, the process for taking out the molded object after the curing, and similar factors into consideration.

Furthermore, in this embodiment of the present invention, since a three-dimensional molded object is formed by using the photo-curable resin composition 9, non-cured resin remaining inside of the structure can be easily removed even when the three-dimensional structure has a complex internal structure like the one described above. Therefore, it is also possible to improve the molding accuracy in terms of this fact.

Although embodiments of the present invention has been explained in detail so far, various modifications, such as using a molding device using no DMD, can be made without departing from the spirit of the present invention.

### Industrial Applicability

The present invention can be applied to an optical molding method in which light is selectively radiated to a photo-curable resin composition to form a cured resin layer, and the cured resin layers are laminated one after another to form a three-dimensional figure.

## Claims

1. An optical molding method to form a three-dimension shape object in which cured resin layers are laminated and integrated, the optical molding method comprising: forming a cured resin layer of a photo-curable composition by irradiating a photo-curable composition layer with light; forming the photo-curable composition layer again above the cured resin layer;
forming further a cured resin layer of the photo-curable composition by radiating a light; and repeating these steps;
wherein the photo-curable composition layer is formed by:
applying a photo-curable resin composition containing (A) resin, (B) a compound having at least one ethylenic unsaturated double bond, and (C) an organic solvent above a base material or above the cured resin layer formed above the base material; and
removing the (C) organic solvent contained in the photo-curable resin composition; and
wherein the three-dimension shape object is formed by removing the photo-curable composition that is not cured in the cured resin layers after the formation of all the cured resin layers is completed.

2. The optical molding method according to Claim 1, wherein the amount of (A) resin component in the photo-curable resin composition is in the range of 20 to 90 mass% when the entire component excluding (C) organic solvent is defined as 100 mass%.

3. The optical molding method according to Claim 1 or 2, wherein the (A) resin is soluble in an alkaline aqueous solution.

4. The optical molding method according to any one of Claims 1 to 3, wherein the (A) resin contains an ethylenic unsaturated group.

5. The optical molding method according to Claim 3, wherein the removal of the photo-curable composition that is not cured is carried out with an alkaline aqueous solution.

6. The optical molding method according to any one of Claims 1 to 4, wherein the removal of the photo-curable composition that is not cured is carried out with an organic solvent.

7. The optical molding method according to any of Claims 1, 2, 3, 5, and 6, wherein the (A) resin is an alkali-soluble copolymer containing the following structural units (a), (b), and (c):
(a) a structural unit derived from a radical polymerizable compound having a carboxyl group;
(b) a structural unit derived from a radical polymerizable compound having a phenolic hydroxyl group; and
(c) a structural unit derived from other radical polymerizable compounds.
